# EUROPEAN PATENT SPECIFICATION

(11) **EP 3 546 337 B1**
(45) Date of publication and mention of the grant of the patent: **25.09.2024**
(21) Application number: 16922427.6
(22) Date of filing: 25.11.2016
(51) Int. Cl.: B63B 35/44, B63B 1/10

(54) **FLOATING STRUCTURE**
SCHWIMMENDE STRUKTUR
STRUCTURE FLOTTANTE

(43) Date of publication of application: 02.10.2019
(73) Proprietor: Japan Marine United Corporation, Yokohama-City Kanagawa 2200012 (JP)
(72) Inventor: YOSHIMOTO Haruki, Kanagawa 2200012 (JP); AWASHIMA Yuji, Kanagawa 2200012 (JP)
(74) Representative: Louis Pöhlau Lohrentz
(86) International application number: PCT/JP2016/084973
(87) International publication number: WO 2018/096650

(56) References cited:
- EP-A1- 2 933 181
- WO-A1-2013/040871
- GB-A- 2 538 329
- GB-A- 2 538 329
- JP-A- 2001 180 584
- JP-A- 2008 074 297
- JP-A- 2015 037 935
- US-A1- 2012 103 244

## Description

### Technical Field

The present invention relates to a floating structure with a structure supported on water by buoyancy such as an offshore power generation or storage facility.

### Background Art

Recently, suspended type floating structures have been proposed as offshore facilities for wind or solar power generation and mining, manufacturing and storing of various resources.

Such floating structures include various types such as "spar type", "semi-submersible type", "pontoon type" or "TLP (tension leg platform) type". Among them, the so-called "semi-submersible type" floating structure comprises a plurality of vertically extending columnar columns interconnected through a horizontally extending connecting body. Each of the columns is a buoyancy body with an inner cavity and is floatable on water by buoyancy. Such columns are deployed horizontally and are interconnected to increase a metacentric radius of the whole floating structure and thus ensure a sufficient restoring force.

Each of the columns floating on water has a lower portion submerged (a submerged portion) and an upper portion above a water surface on which an upper structure is placeable. For example, when the semi-submersible floating structure as mentioned in the above is employed for an offshore wind power generation facility, a wind turbine as the upper structure is connected to an upper end of one of the columns.

Technical literatures disclosing semi-submersible floating structures are, for example, undermentioned Patent Literatures 1,2 and 3. A floating structure (an offshore platform) disclosed in Patent Literature 1 comprises three columns on one of which (a tower support column) a wind turbine tower is placed. The remaining two columns serves not only to ensure a sufficient metacentric radius but also as stabilizing columns for adjustment of buoyancy balance. By contrast, a floating structure for an offshore facility disclosed in Patent Literature 2 comprises four columns, i.e., a centrally positioned central floating body and three outer floating bodies arranged therearound; a wind turbine is placed on an upper portion of the central floating body.

### Citation List

### Patent Literatures

Patent Literature 1: JP 2015-016860A
Patent Literature 2: JP 2010-280301A
Patent Literature 3: WO 2013/040871 A1

### Summary of Invention

### Technical Problems

In the floating structure disclosed in Patent Literature 1, the three columns are symmetrically arranged to provide respective apexes of an equilateral triangle in planar view. The wind turbine tower is placed on the tower support column which provides one of the apexes of the triangle. Thus, a weight on the tower support column is extremely larger than that on each of the other columns so that a gravity center of the whole floating structure including the wind turbine tower greatly deviates from a center of the equilateral triangle. Such deviation in gravity center may cause tilting of the floating structure; thus, it is generally conducted for prevention of such tilting that each column is provided with an adjustive ballast tank and the columns with no upper structure thereon are increased in weight by pumping water into the ballast tanks of the same, which requires that each column has a large volume for the adjustive ballast tank. Such countermeasure of pumping the ballast water in accordance with the weight of the tower support column to increase weights of the columns other than the tower support column may correct the position of the gravity center to assure horizontality of the whole floating structure; however, it may bring about non-uniformity of load distribution in the floating structure. As a result, a large bending moment may apply on beams interconnecting the columns, leading to necessity of strengthening the connecting structure between the columns to an extent endurable to such bending moment. In this manner, in the floating structure as disclosed in Patent Literature 1, many steel members are required both for the volume of the adjustive ballast tank and strengthening of the beams, disadvantageously leading to increase in construction cost.

In the floating structure for the offshore facility as disclosed in Patent Literature 2, the central floating body is arranged centrally of an equilateral triangle provided by the outer three floating bodies in planar view and the wind turbine is placed on the central floating body so that no deviation in the gravity center occurs. However, such arrangement requires a structure connecting the outer floating bodies with the central floating body, leading to structural complication of the whole and resultant increase in construction cost just the same. Though there is no need of pumping water into adjustive ballast tanks to comply with any deviation in gravity center, non-uniformity in load may occur just the same between the central and outer floating bodies, resulting in required strengthening of the members connecting the central floating body with the outer floating bodies.

In view of the above, the invention has its object to provide a floating structure in which load balance can be corrected while increase in size of the structure and strengthening of the structure are avoided as much as possible to suppress increase in construction cost. Solution to Problems

The invention is directed to a semi-submersible type floating structure as defined by claim 1. Accordingly, it is disclosed a floating structure with a plurality of columns as vertically extending columnar buoyancy bodies and a connecting body for interconnecting said columns deployed horizontally, an upper structure being connected to an upper portion of at least one of said columns, whereby the whole floating structure is supported on water, the floating structure constructed such that the column among said columns on which applied downwardly from said upper structure is a load larger than that on each of the other columns is larger in buoyancy than each of the other columns.

In the floating structure of the invention, the column on which applied downwardly from said upper structure is the load larger than that on each of the other columns may have a submerged portion with a volume larger than that of a submerged portion of each of the other columns.

In the floating structure of the invention, the column on which applied downwardly from said upper structure is the load larger than that on each of the other columns are provided with a lower hull having an inner cavity and projecting horizontally from said column.

In the floating structure of the invention, equipment for an operation of said upper structure or of said floating structure may be arranged in the column on which applied downwardly from the upper structure is the load larger than that on each of the other columns.

In the floating structure of the invention, the connecting body for interconnecting said columns may have a connection provided with a buoyancy body and connected to the column on which applied downwardly from the upper structure is the load larger than that on each of the other columns.

### Advantageous Effects of Invention

A floating structure according to the invention can exhibit an excellent effect that load balance can be corrected while increase in size of the structure and strengthening of the structure are avoided as much as possible to suppress increase in construction cost.

### Brief Description of Drawings

Fig. 1 is a perspective view showing a first embodiment of the invention;
Fig. 2 is a sectional view showing the first embodiment of the invention and is a view looking in a direction of arrows II in Fig. 1;
Fig. 3A is a sectional view schematically showing the first embodiment of the invention;
Fig. 3B is a graph showing a load distribution in the first embodiment of the invention;
Fig. 3C is a graph showing shearing force and bending moment distributions in the first embodiment of the invention;
Fig. 4A is a sectional view schematically showing a first reference example;
Fig. 4B is a graph showing a load distribution in the first reference example of the invention;
Fig. 4C is a graph showing shearing force and bending moment distributions in the first reference example of the invention;
Fig. 5 is a perspective view showing a second embodiment of the invention;
Fig. 6A is a front view schematically showing the second embodiment of the invention;
Fig. 6B is a graph showing a load distribution in the second embodiment of the invention;
Fig. 7A is a front view schematically showing a second reference example of the invention;
Fig. 7B is a graph showing a load distribution in the second reference example of the invention;
Fig. 8 is a perspective view showing a third embodiment of the invention;
Fig. 9 is a perspective view showing a fourth embodiment of the invention;
Fig. 10A is a perspective view showing another embodiment of the invention; and
Fig. 10B is a perspective view showing still another embodiment of the invention.

### Description of Embodiments

Embodiments of the invention will be disclosed in conjunction with attached drawings.

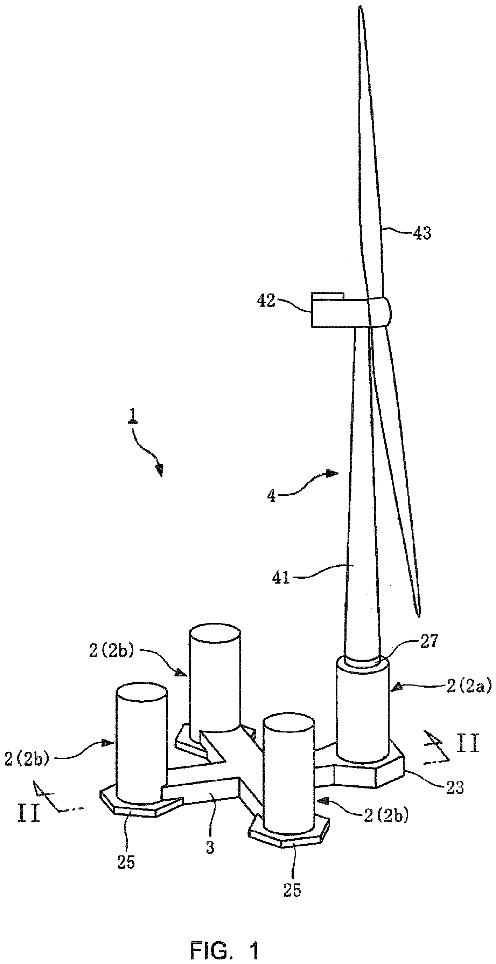

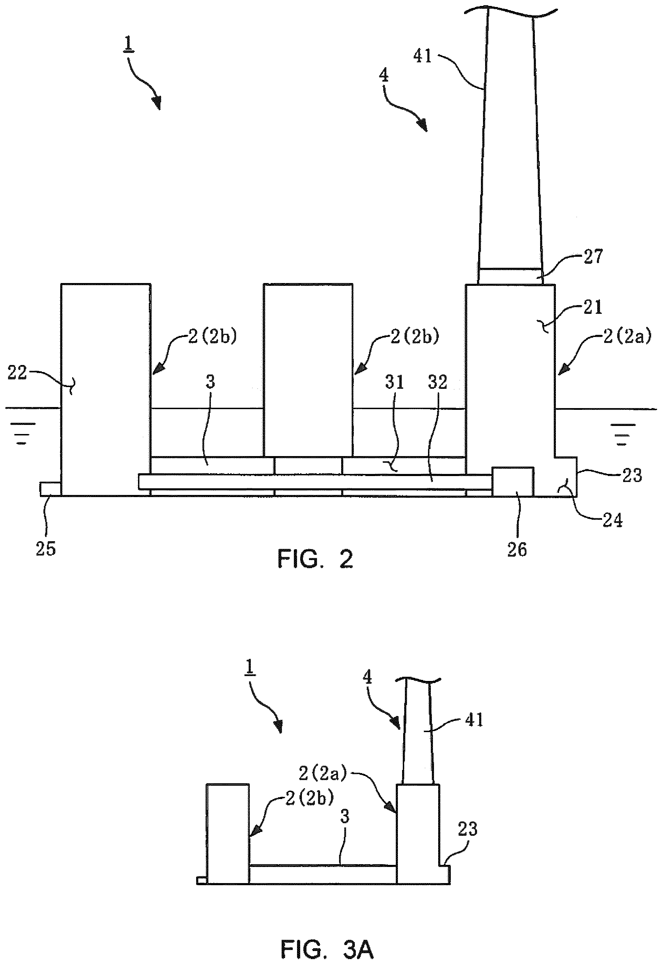

Figs. 1 and 2 show an embodiment (a first embodiment) of a floating structure according to the invention. As shown in Fig. 1, a semi-submersible type floating structure 1 comprises vertically extending four columnar columns 2 with lower portions interconnected by a horizontally extending connecting body 3. The four columns 2 are buoyancy bodies each with an inner cavity and are arranged to provide respective apexes of a square in planar view. An upper structure 4 is connected to an upper portion of one (a main column) 2a of the four columns 2. Thus, the four columns 2 deployed horizontally support on water the whole floating structure 1 to which the upper structure 4 is connected.

The main column 2a and the three side columns 2b are columnar bodies each generating buoyancy through at least partial submerging thereof, and have inner cavities 21 and 22, respectively. Each of the cavities 21 and 22 generates buoyancy for the corresponding column 2 and is at least partially utilizable as a ballast tank. The connecting body 3 also has an inner cavity 31 and may be utilized as a buoyancy-generating buoyancy body or a ballast tank as needed.

The main column 2a has a lower portion with a lower hull 23 which projects horizontally and radially outwardly. The lower hull 23 serves not only as a heave plate to increase water resistance against vertical movements of the main column 2a to thereby attenuate pitches but also to impart buoyancy to the main column 2a through an inner cavity 24 formed integrally with the cavity 21 in the main column 2a. In other words, the cavity 21 in the main column 2a has an increased diameter and an increased volume by the cavity 24 provided therebeneath. By contrast, each of the three side columns 2b has a lower portion with a horizontally projecting footing 25 which serves as a heave plate to attenuate pitches of the side column 2b but has no inner cavity and provides no buoyancy body.

The lower hull 23 of the main column 2a and the footings 25 of the side column 2b have mooring lines (not shown) connected thereto so that the floating structure 1 is moored through the mooring lines to water bottom and dwells in a predetermined water area.

As shown in Fig. 2, placed in the cavity 24 beneath the cavity 21 of the main column 2a is a pump 26 communicated with the cavities 22 in the side columns 2b through a water feed pipe 32 in the cavity 31 of the connecting body 3. Water pumped up from outside of the floating structure 1 by the pump 26 may be supplied to the cavities 21, 22 and 31 of the main and side columns 2a and 2b and the connecting body 3, respectively. The cavities 21 and/or 24 in the main column 2a may also accommodate a machine or other room (not shown) provided with, for example, various controllers and power units as needed.

The upper structure 4 is, for example, a wind turbine for wind power generation comprising a brace member 41, a nacelle 42 and blades 43 as shown in Fig. 1. The brace member 41 is erected on the main column 2a through a connection 27 on an upper end of the main column 2a. The nacelle 42 is internally provided with a dynamo (not shown) to generate power through rotation of the blades 43. The upper structure 4 is not limited to the wind power generation facility as illustrated. For example, it may be a solar power generation facility; otherwise assumable as the upper structure 4 are various facilities placeable on water such as observation, communication and mining facilities.

Next, mode of operation of the above-mentioned first embodiment will be described.

When the floating structure 1 is to be placed in position on an ocean or the like, the floating structure 1 and the brace member 41, the blades 43 and the like of the wind turbine 4 as the upper structure are separately fabricated, for example, in a plant in a maritime area and then these are towed by a ship or the like to a sea area on which the floating structure is to be placed. Upon towing, it is preferable that the floating structure 1 has minimum submerged portions so as to suppress resistance from water and fuel consumption of the ship. Thus, a minimum amount of ballast water is poured into the inner cavities 21, 22, 24 and 31 in the columns 2 (the main and side columns 2a and 2b) and connecting body 3, and the towing is conducted in a state where a draft line is, for example, near an upper surface of the lower hull 23.

Upon arrival at the sea area on which the floating structure is to be placed, the brace member 41 of the wind turbine 4 is erected on the connection 27 on the upper portion of the main column 2a in the floating structure 1 and the blades 43 are attached to the nacelle 42. In this case, ballast water is properly supplied from the pump 26 in the cavity 24 underneath the cavity 21 in the main column 2a through the water feed pipe 32 to the cavities 22 and 31 in the side columns 2b and connecting body 3 to thereby adjust the floating structure 1 in balance and stabilize the same in water, partly using the cavities 22 and 31 as adjustive ballast tanks. As needed, water may be also poured into the cavities 21 and 24 in the main column 2a and lower hull 23. Through such process, the floating structure 1 is placed horizontally as shown in Figs. 1 and 2 to support thereon the wind turbine 4. In this case, the draft line is positioned vertically midway of the columns 2.

Among the columns 2, the main column 2a with the wind turbine 4 connected to the upper portion thereof has extremely large weight applied thereon in comparison with each of the other side columns 2b. Meanwhile, by the lower hull 23 on the lower portion, the main column 2a has the submerged portion large in volume and thus large resultant buoyancy in comparison with each of the side columns 2b. Due to the buoyancy, the main column 2a resists the load applied by the upper structure 4 so that load disequilibrium of the same with the side columns 2b is corrected to keep balance of the whole floating structure 1.

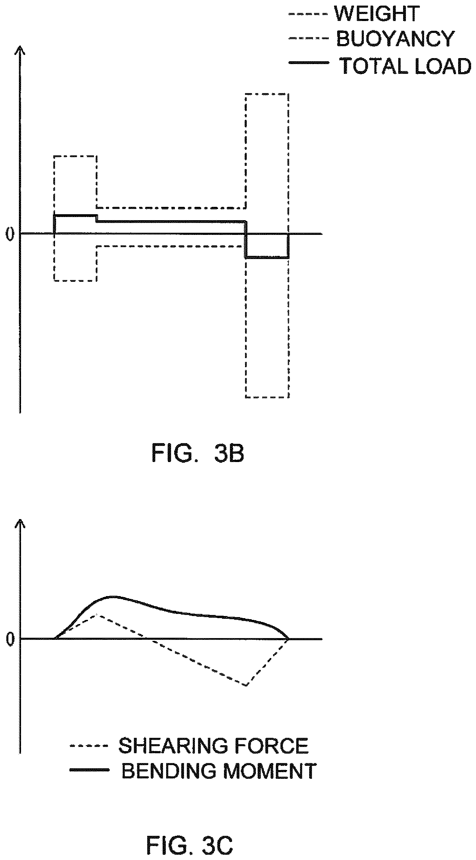

Distributions of weights, buoyancies and resultant bending moments and the like in the floating structure 1 as mentioned in the above will be explained in conjunction with Figs. 3A-3C. Fig. 3A is a schematic view of the floating structure 1 along a section passing through the main column 2a and the side column 2b positioned diagonally thereto and Fig. 3B shows distributions of weights and buoyancies in the section.

A short dashed line in Fig. 3B shows weights (downward loads) applied to portions shown in Fig. 3A. The main column 2a positioned right, which has the wind turbine 4 connected to the upper potion thereof, has larger load applied than the side column 2b positioned left. A dashed-dotted line in Fig. 3B shows buoyancies (upward loads) applied to the portions of the floating structure 1; the main column 2a with the lower hull 23 has buoyancy larger than the side column 2b. A solid line in Fig. 3B shows total loads as sums of the weights and buoyancies; slight loads are applied downward and upward on the main and side columns 2a and 2b, respectively, so that the total becomes zero into balancing of the floating structure 1 as a whole.

Fig. 3C shows distributions of shearing forces and bending moments in the portions of the floating structure 1 due to the load distribution as mentioned in the above. The shearing forces (vertical forces) shown in Fig. 3C by a short dashed line appear as integration of the load curve shown by solid line in Fig. 3B; the bending moments shown by a solid line in Fig. 3C appear integration of the shearing forces. In the embodiment illustrated, the distribution of the bending moments becomes maximum on a left side position of the connecting body 3.

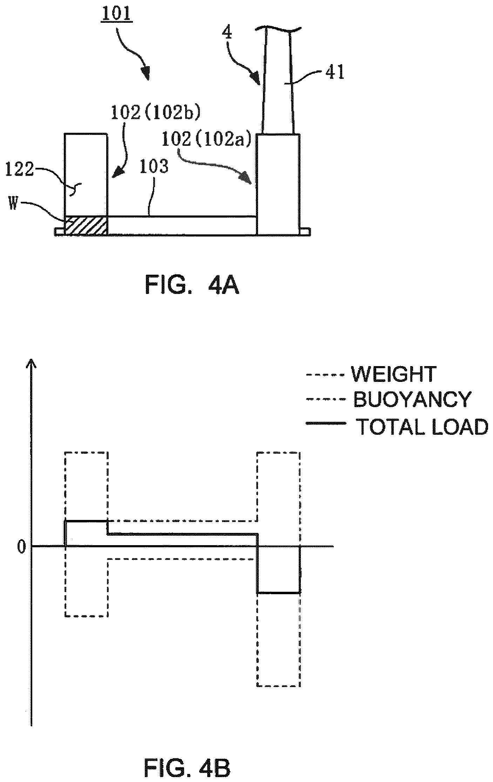

As a reference example, weight and other distributions in a typical conventional floating structure are shown in Figs. 4A-4C. As shown in Fig. 4A, a floating structure 101 of the first reference example comprises a main column 102a with no additional buoyancy body such as the lower hull 23 (see Fig. 3A) so that there is no difference in volume of the submerged portions between the main and side columns 102a and 102b. Thus, buoyancies on the respective columns 102 (the main and side columns 102a and 102b) are the same. In order to keep balance between the main and side columns 102a and 102b in the floating structure 101 thus constructed, it is generally conducted to pour ballast water W into the cavity 122 of the side column 102b.

In the floating structure 101 of the first reference example, as shown in Fig. 4B, weights (downward loads) shown in a short dashed line become larger in the side column 102b shown left in the figure, by the ballast water W, than that of the side column 2b in the first embodiment (see Fig. 3B). Buoyancies (upward load) shown in a dashed-dotted line are the same between the main and side columns 102a and 102b.

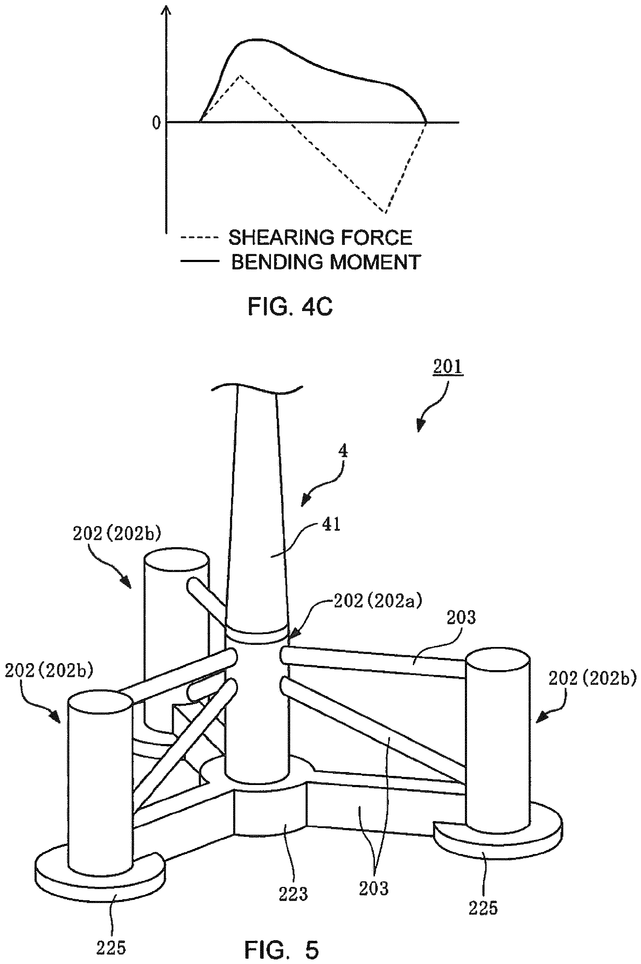

Loads as sums of the weights and buoyancies as shown by a solid line in Fig. 4B are applied downward and upward in the main and side columns 102a and 102b, respectively, and absolute values thereof are larger than those of the first embodiment (see Fig. 3B), respectively. Thus, as shown in Fig. 4C, the shearing forces as integration of the loads and bearing moments as integration of the shearing forces are larger than those of the first embodiment (see Fig. 3C), respectively.

As is clear from the above, the floating structure 1 of the first embodiment as shown in Figs. 1-3 is smaller in shearing force and bending moment generated in the connecting body 3 than the floating structure 101 of the first reference example as shown in Fig. 4. Thus, required strengthening of the connecting body 3 is low, leading to reduction in weight of steel members used for the connecting body 3. Moreover, in the floating structure 101 of the first reference example shown in Fig. 4, the cavity 122 in the side column 102b requires a space for an adjustive ballast tank for balancing with the main column 102a to which the upper structure 4 is connected; by contrast, the floating structure 1 in the first embodiment requires no volume for an adjustive ballast tank so that the whole side column 2b can be made small in size, which also contributes to reduction in weight of the steel members used (though the main column 2a requires additional steel members for the lower hull 23, such added amount is fewer than the reduced amount in the side columns 2b). In provisional calculations by the applicant, the floating structure 1 of the fist embodiment can be reduced in displacement by, for example, about 2% in comparison with the floating structure 101 of the first reference example.

In the floating structure 1 of the first embodiment, the machine room is arranged underneath the cavity 21 in the main column 2a for accommodation of the pump 26 and other equipment, which is because arrangement of the equipment in connection with the upper structure 4 (when the upper structure 4 is the wind turbine as shown in Fig. 1, equipment for power conversion/delivery, a controller for the wind turbine 4 and the like) in a position as near as possible to the upper structure 4 is most effective in view of wiring and pipe laying and because arrangement of other equipment (the pump 26, a controller therefor and the like) is simplified by arranging them in a same position as much as possible. In this connection, the first embodiment in which the main column 2a has the lower portion with the lower hull 23 contributing to enlargement of the cavity 21 by the cavity 24 is advantageous in that various equipment as mentioned in the above can be easily laid out there.

As is clear from the above, the first embodiment is directed to the floating structure 1 with the plurality of columns 2 as vertically extending columnar buoyancy bodies and the connecting body 3 for interconnecting the columns 2 deployed horizontally, the upper structure (wind turbine) 4 being connected to the upper portion of at least one (main column 2a) of the columns 2, whereby the whole floating structure is supported on water, the floating structure 1 being constructed such that the column 2 (the main column 2a) among the columns 2 on which applied from the upper structure 4 is the load larger than that on each of the other columns 2 is larger in buoyancy than each of the other columns 2 (the side columns 2b); thus, imparting of the buoyancy to the main column 2a against the load from the upper structure 4 can correct any unbalance of load distribution between the columns 2 and reduce bending moments generated on the connecting body 3.

In the first embodiment, the submerged portion of the main column 2a is larger in volume than that of each of the other columns 2 (side columns 2b) so that the buoyancy against the load from the upper structure 4 can be appropriately imparted to the main column 2a.

In the first embodiment, the main column 2a has the lower portion with the lower hull 23 which has the inner cavity and projects horizontally from the main column 2a so that the lower hull 23 can increase water resistance against the vertical motions of the main column 2a to thereby attenuate the pitches.

In the first embodiment, equipment in connection with the operation of the upper structure 4 or the floating structure 1 is arranged inside of the main column 2a, so that a wide space is available for accommodation of the various equipment, resulting in easiness in layout.

Thus, according to the first embodiment, load balance can be corrected while increase in size of the structure and strengthening of the structure are avoided as much as possible to suppress increase in construction cost.

Fig. 5 shows a floating structure of a further embodiment (a second embodiment) according to the invention which is fundamentally similar in construction to the above-mentioned floating structure 1 (see Figs. 1 and 2) of the first embodiment. A floating structure 201 of the second embodiment is different in arrangement of columns from the first embodiment.

Among four columns 202 in the floating structure 201 of the second embodiment, three side columns 202b are arranged on respective apexes of an equilateral triangle in planar view and a main column 202a is positioned centrally of the triangle provided by the side columns 202b. The central main column 202a is connected with the surrounding side columns 202b through connecting bodies 203, and a wind turbine 4 as the upper structure is connected to an upper portion of the main column 202a. Specifically, the floating structure illustrated is similar in arrangement to that disclosed in Patent Literature 2.

However, in the second embodiment, the main column 202a has a lower portion with a lower hull 223 as a heave plate and also as a buoyancy body. By contrast, each of the side columns 202b has a lower portion with a footing 225 merely serving as a heave plate. Thus, the main column 202a is larger in buoyancy, by the lower hull 223, than that of each of the side column 202b.

In the floating structure 201 as mentioned in the above, which has the connecting bodies 203 interconnecting the columns 202 more complex than the connecting body 3 of the first embodiment (see Figs. 1 and 2), mechanistic unbalance between the columns is properly corrected in comparison with the floating structure disclosed in Patent Literature 2. Explanation will be made thereon hereinafter.

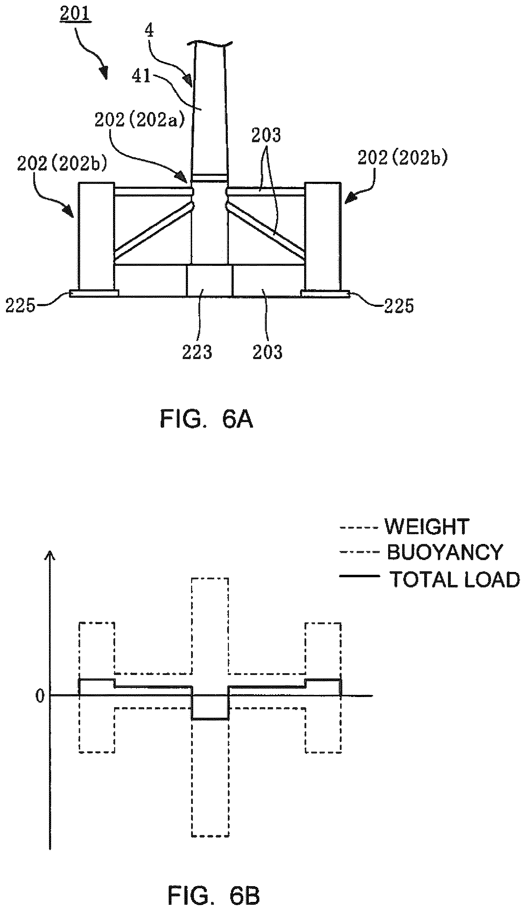

First, in the floating structure 201 of the second embodiment, the upper structure 4 is connected to the main column 202a as shown in Fig. 6A and thus a load applied downward on the central main column 202a is extremely larger than that on each of the left and right side columns 202b as shown by a short dashed line in Fig. 6B. Meanwhile, as shown in Fig. 6A, the main column 202a has the lower portion with the lower hull 223 so that the buoyancy (the upward load) applied on the central main column 202a is larger than that on each of the left and right side columns 202b as shown by a dashed-dotted line in Fig. 6B. As a result, as shown by a solid line in Fig. 6B, total loads of the weights and the buoyancies become slight and downward in the main column 202a and slight and upward in each of the side columns 202b.

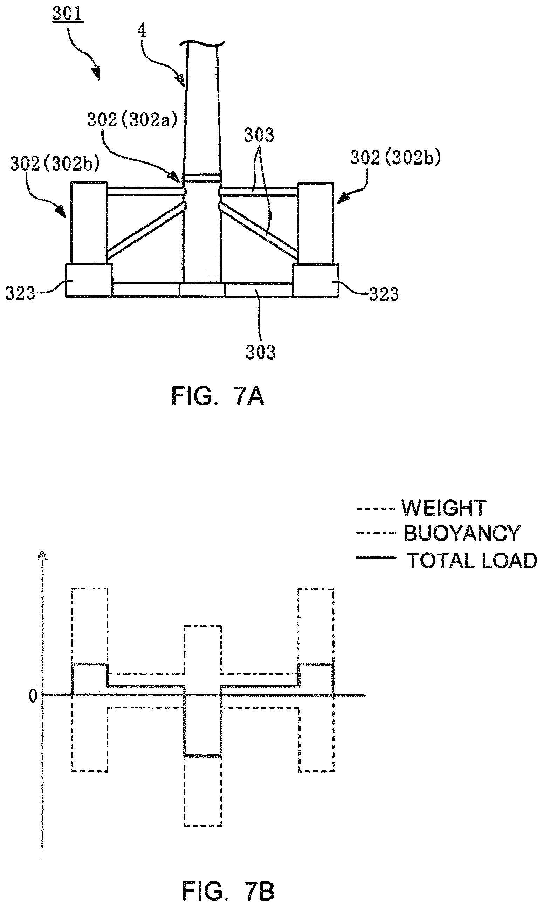

As a reference example for the second embodiment, Fig. 7A shows an example of a floating structure (second reference example). The second reference example has a floating structure 301 similar in construction to that disclosed in Patent Literature 2 and is in common with the second embodiment (see Figs. 5 and 6A) in that a main column 302a is installed centrally of three side columns 302b providing respective apexes of an equilateral triangle in planar view and is connected with the side columns 302b through connecting bodies 303. However, the second reference example is different from the second embodiment in that the main column 302a has no lower hull and each of the side columns 302b has a lower hull 323.

In such a construction, as shown by a short dashed line in Fig. 7B, downward load distribution is substantially similar to that of the second embodiment (see Fig. 6B; however, the load on the main column 302a is slightly smaller by no provision of a lower hull; and by contraries, the load on each of the side columns 302b is larger by the provision of the lower hull 323). Meanwhile, buoyancies shown by a dashed-dotted line are small in the main column 302a and large in each of the side columns 302b. As a result, as shown by a solid line, the total loads become larger and downward in the central main column 302a and larger and upward in each of the left and right side columns 302b than those of the second embodiment.

Specifically, unlike the floating structure 101 (see Fig. 4) of the first reference example, the floating structure 301 (see Fig. 7) of the second reference example requires no ballast water injected into the side columns 302b for balancing with the load of the upper structure 4; however, there still exists load unbalance between the main column 302a receiving a larger load from the upper structure 4 and each of the side columns 302b, which causes a larger shearing force or bending moment on the connecting bodies 303. In the floating structure 201 of the second embodiment (see Figs. 5 and 5), the main column 202a to which the upper structure 4 is connected is provided with the lower hull 223 to increase buoyancy, thereby counteracting the load of the upper structure 4 to reduce load unbalance with the side columns 202b.

As a result, in the floating structure 201 of the second embodiment, required strengthening of the connecting bodies 203 can be lowered to reduce a required amount of steel members for the connecting bodies 203. Though the large-volume lower hull 223 is required for the central main column 202a, no or a smaller lower hull is required for each of the surrounding side columns 202b. Thus, a required amount of steel members for the whole floating structure 201 can be reduced.

The other advantageous effects of the second embodiment are omitted since they are similar to those of the above-mentioned first embodiment (see Figs. 1-3). Also in the second embodiment, load balance can be corrected while increase in size of the structure and strengthening of the structure are avoided as much as possible to suppress increase in construction cost.

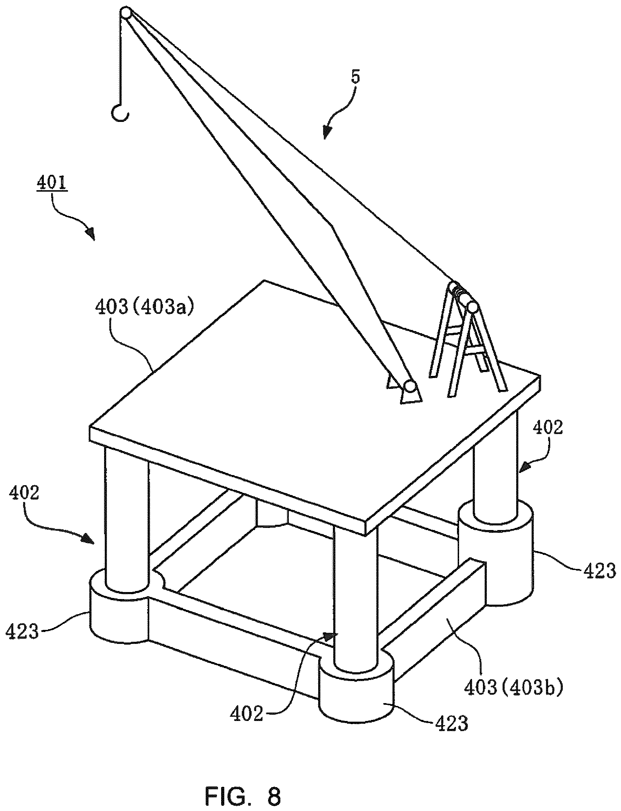

Fig. 8 shows a floating structure of a still further embodiment (a third embodiment) of the invention in which an upper structure 5 connected to upper portions of the columns 402 constituting a floating structure 401 is not a wind turbine but a crane, which brings about difference in connecting bodies 403 and the like from that or those of the first or second embodiment (see Figs. 1 and 2 or Fig. 5) .

In the floating structure 401 of the third embodiment, upper and lower portions of the four columns 402 are interconnected through upper and lower connecting bodies 403a and 403b, respectively. The upper connecting body 403a provides a horizontal surface in the form of substantially quadrate in planar view on upper ends of the four columns 402 arranged at respective apexes of the quadrate provided by the upper connecting body 403a. The lower connecting bodies 403b interconnect lower ends of the columns 402 to provide sides of the quadrate. The crane as the upper structure 5 is placed on the surface provided by the upper connecting body 403a.

In such a construction, none of the columns 402 is positioned just below a gravity center of the crane 5 as the upper structure, and a downward load by a weight of the crane 5 is applied to each of the four columns 402 through the upper connecting body 403a. The gravity center of the crane 5 is not aligned with the gravity center of all the four columns 402 in planar view and is in eccentricity. Thus, loads applied from the crane 5 to the four columns 402 are not equal, resulting in load deviation between the columns 402. In a state shown in Fig. 8, the gravity center of the crane 5 deflects right in the figure relative to a gravity center of the four columns 402, resulting in application of an especially large downward load on the column 402 positioned at a right end in the figure. Thus, in the floating structure 401 of the third embodiment, the lower hull 423 of the column 402 on the right in the figure is made larger than the lower hulls 423 of the other columns 402 to produce a large buoyancy on the column 402 on the right in the figure to thereby attain load balance between the columns 402 .

The other advantageous effects of the third embodiment are omitted since they are similar to those of the above-mentioned first embodiment (see Figs. 1-3). Also in the third embodiment, load balance can be corrected while increase in size of the structure and strengthening of the structure are avoided as much as possible to suppress increase in construction cost.

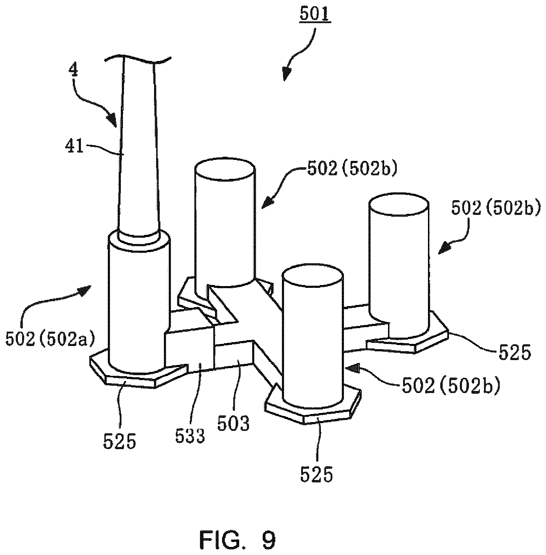

Fig. 9 shows a still further embodiment (a fourth embodiment) of a floating structure according to the invention. Though similar in fundamental construction to the first embodiment (see Figs. 1 and 2), a floating structure 501 of the fourth embodiment has a connecting body 503 interconnecting columns 502 and provided with a buoyancy body 533 on a connection with the main column 502a. The buoyancy body 533 imparts buoyancy to the main column 502a on which the upper structure 4 is connected.

In this case, in order to impart buoyancy to the main column 502a, there is no need of adding structural changes on the main column 502a itself; only design change of the connecting body 503 will suffice. Though the main column 502a in which various equipment may be placed may be low in freedom degree with respect to its inner structure and layout, the connecting body 503 is meritorious in that provision of the buoyancy body 533 thereon is less restrictive in design.

Thus, in the fourth embodiment, the connecting body 503 interconnecting the columns 502 has the buoyancy body 533 on the connection with the column 502 (the main column 502a) on which larger load is applied downward from the upper structure 4 than each of the loads on the other columns 502 so that buoyancy can be imparted to the main column 502a without structural change of the main column 502a.

The other advantageous effects of the fourth embodiment are omitted since they are similar to those of the above-mentioned first embodiment (see Figs. 1-3). Also in the fourth embodiment, load balance can be corrected while increase in size of the structure and strengthening of the structure is avoided as much as possible to suppress increase in construction cost.

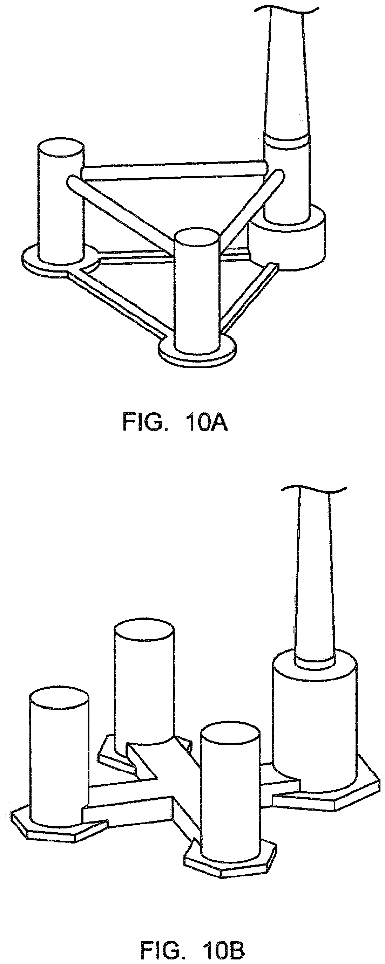

Figs. 10A and 10B show still further embodiments of a floating structure according to the invention. The number of the columns may be three as shown in Fig. 10A or may be five or more (not shown). Appropriate changes may be conducted on arrangement of columns and construction of a connecting body depending on conditions such as kind and construction of an upper structure. Moreover, as in the first embodiment (see Figs. 1 and 2), a main column may be provided with a lower hull; as in the fourth embodiment (see Fig. 9), a connecting body may be provided with a buoyancy body; or as shown in Fig. 10B, a diameter of a column itself may be changed to impart a large buoyancy. Alternatively, though not shown, a buoyancy body may be attached from outside to an existing column or connecting body to impart buoyancy; in this case, though steel members for construction of the floating structure cannot be reduced, it is effective, for example, upon exchange or addition of an upper structure after the floating structure is constructed. A floating structure of the invention may take various constructions as long as buoyancy can be properly imparted to a column.

Also in each of such embodiments, load balance can be corrected while increase in size of the structure and strengthening of the structure are avoided as much as possible to suppress increase in construction cost.

It is to be understood that a floating structure according to the invention is not limited to the above embodiments and that various changes and modifications may be made without departing from the scope of the invention.

### Reference Signs List

- 1: floating structure
- 2: column
- 2a: column (main column)
- 2b: column (side column)
- 3: connecting body
- 4: upper structure (wind turbine)
- 5: upper structure (crane)
- 23: lower hull
- 201: floating structure
- 202: column
- 202a: column (main column)
- 202b: column (side column)
- 203: connecting body
- 223: lower hull
- 401: floating structure
- 402: column
- 403: connecting body
- 403a: connecting body (upper connecting body)
- 403b: connecting body (lower connecting body)
- 423: lower hull
- 501: floating structure
- 502: column
- 502a: column (main column)
- 502b: column (side column)
- 503: connecting body
- 533: buoyancy body

## Claims

1. A semi-submersible type floating structure (1; 201; 401; 501) comprising a plurality of columns (2a, 2b; 202a, 202b; 402; 502a, 502b) as vertically extending columnar buoyancy bodies, a connecting body (3; 203; 403a, 403b; 503) for interconnecting said columns (2a, 2b; 202a, 202b; 402; 502a, 502b) deployed horizontally, and an upper structure (4; 5) connected to an upper portion of at least one (2a; 202a; 402; 502a) of said columns (2a, 2b; 202a, 202b; 402; 502a, 502b) supporting the whole floating structure (1; 201; 401; 501) on water,
the column (2a; 202a; 402; 502a) on which applied downwardly from said upper structure (4; 5) is the load larger than that on each of the other columns (2b; 202b; 402; 502b) has a lower portion with a lower hull (23; 223; 423) having an inner cavity (24) and projecting horizontally from said column (2a; 202a; 402; 502a) at a submerged portion,
the column (2a; 202a; 402; 502a) among said columns (2a, 2b; 202a, 202b; 402; 502a, 502b) on which applied downwardly from said upper structure (4; 5) is a load larger than that on each of the other columns (2b; 202b; 402; 502b) is larger in buoyancy than each of the other columns (2b; 202b; 402; 502b), thereby correcting load balance while increase in size of the structure (1; 201; 401; 501) and strengthening of the structure (1; 201; 401; 501) are avoided.

2. The floating structure (1; 201; 401; 501) as claimed in claim 1 wherein the column (2a; 202a; 402; 502a) on which applied downwardly from said upper structure (4; 5) is the load larger than that on each of the other columns (2b; 202b; 402; 502b) has a submerged portion with a volume larger than that of a submerged portion of each of the other columns (2b; 202b; 402; 502b).

3. The floating structure (1; 201; 401; 501) as claimed in claim 2 wherein equipment (26) for an operation of said upper structure (4; 5) or of said floating structure (1; 201; 401; 501) is arranged in the column (2a; 202a; 402; 502a) on which applied downwardly from said upper structure (4; 5) is the load larger than that on each of the other columns (2b; 202b; 402; 502b).

4. The floating structure (501) as claimed in claim 1 wherein the connecting body (503) for interconnecting said columns (502a, 502b) has a connection provided with a buoyancy body (533) and connected to the column (502a) on which applied downwardly from said upper structure (4) is the load larger than that on each of the other columns (502b).

## Patentansprüche

1. Schwimmende Struktur halbtauchfähigen Typs (1; 201; 401; 501), umfassend eine Vielzahl von Säulen (2a, 2b; 202a, 202b; 402; 502a, 502b) als vertikal verlaufende säulenförmige Auftriebskörper, einen Verbindungskörper (3; 203; 403a, 403b; 503) zur Verbindung der Säulen (2a, 2b; 202a, 202b; 402; 502a, 502b) untereinander, der horizontal angeordnet ist, und eine obere Struktur (4; 5), die mit einem oberen Abschnitt von mindestens einer (2a; 202a; 402; 502a) der Säulen (2a, 2b; 202a, 202b; 402; 502a, 502b) verbunden ist, was die schwimmende Gesamtstruktur (1; 201; 401; 501) auf Wasser trägt,
wobei die Säule (2a; 202a; 402; 502a), an der von der oberen Struktur (4; 5) eine größere Last nach unten wirkt als bei jeder der anderen Säulen (2b; 202b; 402; 502b), einen unteren Abschnitt mit einem unteren Rumpf (23; 223; 423) mit einem inneren Hohlraum (24) aufweist, der horizontal von der Säule (2a; 202a; 402; 502a) an einem untergetauchten Abschnitt hervorspringt,
wobei die Säule (2a; 202a; 402; 502a) von den Säulen (2a, 2b; 202a, 202b; 402; 502a, 502b), an der von der oberen Struktur (4; 5) eine größere Last nach unten wirkt als bei jeder der anderen Säulen (2b; 202b; 402; 502b), einen größeren Auftrieb aufweist als jede der anderen Säulen (2b; 202b; 402; 502b), wodurch ein Lastausgleich korrigiert wird, während eine größere Dimensionierung der Struktur (1; 201; 401; 501) und eine Verstärkung der Struktur (1; 201; 401; 501) vermieden werden.

2. Schwimmende Struktur (1; 201; 401; 501) nach Anspruch 1, wobei die Säule (2a; 202a; 402; 502a), an der von der oberen Struktur (4; 5) eine größere Last nach unten wirkt als bei jeder der anderen Säulen (2b; 202b; 402; 502b), einen untergetauchten Abschnitt mit einem größeren Volumen aufweist, als das eines untergetauchten Abschnitts jeder der anderen Säulen (2b; 202b; 402; 502b).

3. Schwimmende Struktur (1; 201; 401; 501) nach Anspruch 2, wobei die Ausrüstung (26) für einen Betrieb der oberen Struktur (4; 5) oder der schwimmenden Struktur (1; 201; 401; 501) in der Säule (2a; 202a; 402; 502a) angeordnet ist, an der von der oberen Struktur (4; 5) eine größere Last nach unten wirkt als bei jeder der anderen Säulen (2b; 202b; 402; 502b).

4. Schwimmende Struktur (501) nach Anspruch 1, wobei der Verbindungskörper (503) zur Verbindung der Säulen (502a, 502b) untereinander eine Verbindung aufweist, die mit einen Auftriebskörper (533) versehen und mit der Säule (502a) verbunden ist, an der von der oberen Struktur (4) eine größere Last nach unten wirkt als bei jeder der anderen Säulen (502b).

## Revendications

1. Une structure flottante de type semi-submersible (1 ; 201 ; 401 ; 501) comprenant une pluralité de colonnes (2a, 2b ; 202a, 202b ; 402 ; 502a, 502b) en tant que corps de flottabilité en forme de colonnes à extension verticale, un corps de connexion (3 ; 203 ; 403a, 403b ; 503) pour l'interconnexion desdites colonnes (2a, 2b ; 202a, 202b ; 402 ; 502a, 502b) déployées horizontalement, et une structure supérieure (4 ; 5) connectée à une portion supérieure d'au moins une (2a ; 202a ; 402 ; 502a) desdites colonnes (2a, 2b ; 202a, 202b ; 402 ; 502a, 502b) supportant l'ensemble de la structure flottante (1 ; 201 ; 401 ; 501) sur l'eau,
la colonne (2a ; 202a ; 402 ; 502a) sur laquelle la charge appliquée vers le bas par ladite structure supérieure (4 ; 5) est plus grande que sur chacune des autres colonnes (2b ; 202b ; 402 ; 502b) présente une portion inférieure avec une coque inférieure (23 ; 223 ; 423) ayant une cavité interne (24) et dépassant horizontalement à partir de ladite colonne (2a ; 202a ; 402 ; 502a) au niveau d'une portion submergée,
la colonne (2a ; 202a ; 402 ; 502a), parmi lesdites colonnes (2a, 2b ; 202a, 202b ; 402 ; 502a, 502b), sur laquelle une charge appliquée vers le bas par ladite structure supérieure (4 ; 5) est plus grande que sur chacune des autres colonnes (2b ; 202b ; 402 ; 502b) présente une flottabilité plus importante que chacune des autres colonnes (2b ; 202b ; 402 ; 502b), ce qui permet de corriger l'équilibre des charges tout en évitant l'augmentation de la taille de la structure (1 ; 201 ; 401 ; 501) et le renforcement de la structure (1 ; 201 ; 401 ; 501).

2. La structure flottante (1 ; 201 ; 401 ; 501) selon la revendication 1, dans laquelle la colonne (2a ; 202a ; 402 ; 502a), sur laquelle une charge appliquée vers le bas par ladite structure supérieure (4 ; 5) est plus grande que sur chacune des autres colonnes (2b ; 202b ; 402 ; 502b), présente une portion submergée avec un volume supérieur à celui d'une portion submergée de chacune des autres colonnes (2b ; 202b ; 402 ; 502b).

3. La structure flottante (1 ; 201 ; 401 ; 501) selon la revendication 2, dans laquelle un équipement (26) pour un fonctionnement de ladite structure supérieure (4 ; 5) ou de ladite structure flottante (1 ; 201 ; 401 ; 501) est disposé dans la colonne (2a ; 202a ; 402 ; 502a) sur laquelle la charge appliquée vers le bas par ladite structure supérieure (4 ; 5) est plus grande que sur chacune des autres colonnes (2b ; 202b ; 402 ; 502b).

4. La structure flottante (501) selon la revendication 1, dans laquelle le corps de connexion (503) pour l'interconnexion desdites colonnes (502a, 502b) présente une connexion munie d'un corps de flottabilité (533) et connectée à la colonne (502a) sur laquelle la charge appliquée vers le bas par ladite structure supérieure (4) est plus grande que sur chacune des autres colonnes (502b).
